# EUROPÄISCHE PATENTANMELDUNG

(11) **EP 4 162 782 A1**
(43) Veröffentlichungstag der Anmeldung: **12.04.2023**
(21) Anmeldenummer: 22401025.6
(22) Anmeldetag: 26.09.2022
(51) Int. Cl.: A01C 5/06, A01C 7/20

(54) **REIHENEINHEIT FÜR EINE LANDWIRTSCHAFTLICHE VERTEILMASCHINE UND VERFAHREN ZUM ABLEGEN VON GRANULAREM MATERIAL**

(30) Priorität: 06.10.2021 DE 102021125916
(71) Anmelder: Amazonen-Werke H. Dreyer SE & Co. KG, 49205 Hasbergen (DE)
(72) Erfinder: Mertens, Daniel, 26121 Oldenburg (DE); Warns, Felix, 27804 Berne (DE); Koch, Jens, 29525 Uelzen (DE); Kreilos, Maximilian, 37696 Marienmüster (DE)

(57) **Zusammenfassung**

Reiheneinheit (10) für eine landwirtschaftliche Verteilmaschine zum Ablegen von granularem Material (M) auf einer landwirtschaftlichen Nutzfläche, umfassend; ein Furchenöffnungselement (14), welches mit einem Rahmen (15) der Reiheneinheit gekoppelt und zum Ausbilden einer Furche (B2) entlang eines Ackerbodens (B1) der Nutzfläche geeignet ist; eine Materialablagevorrichtung (13), welche dazu eingerichtet ist, das granulare Material (M) zuzubringen und innerhalb der Furche (B2) abzulegen; ein Furchenverschließungs- und/oder Andrückelement (17), welches relativ zum Rahmen und/oder zum Furchenöffnungselement gesehen in vertikaler Richtung beweglich und in einer Arbeitsrichtung (F) der Reiheneinheit hinter dem Furchenöffnungselement angeordnet und dazu eingerichtet ist, die Furche zu verschließen und/oder anzudrücken; und eine zugeordnete elektronische Auswertevorrichtung (S1) mit wenigstens einer Sensoreinrichtung (20), welche dazu eingerichtet, eine Ablagetiefe und/oder Bedeckungshöhe (H1, H2) des in der Furche abgelegten und/oder bedeckten granularen Materials zu bestimmen.

## Beschreibung

Die Erfindung betrifft eine Reiheneinheit für eine landwirtschaftliche Verteilmaschine gemäß dem Oberbegriff des Patentanspruches 1 und ein Verfahren zum Ablegen von granularem Material gemäß dem Oberbegriff des Patentanspruches 9.

Auf dem Gebiet der Landwirtschaft sind eine Vielzahl unterschiedlicher Varianten von Verteilmaschinen zum Ausbringen bzw. Ablegen von granularem Material, insbesondere Saatgut und/oder Dünger, bekannt. Hierzu zählen neben pneumatischen und/oder mechanischen Sämaschinen auch Einzelkornsämaschinen, welche mittels wenigstens einer Reiheneinheit bzw. einem Säaggregat dazu eingerichtet sind, das granulare Material auf einer landwirtschaftlichen Nutzfläche abzulegen.

Gattungsgemäße Reiheneinheit sind üblicherweise mit der Verteilmaschine, insbesondere einem Maschinenrahmen der Verteilmaschine, koppelbar ausgebildet und umfassen für gewöhnlich zumindest ein Furchenöffnungselement, welches an einem Rahmen der Reiheneinheit angeordnet ist. Das Furchenöffnungselement ist dabei dazu eingerichtet, eine für das granulare Material vorgesehene Furche entlang der Nutzfläche, insbesondere des Ackerbodens, zu öffnen und/oder auszubilden. Ein derartiges Furchenöffnungselement ist dabei häufig nach Art eines Säschars, beispielsweise als Zinken- und/oder Scheibenschar, insbesondere als Doppelscheibenschar, ausgebildet. Ferner umfasst eine derartige Reiheneinheit auch zumindest eine Materialablagevorrichtung, welche dazu eingerichtet ist, das granulare Material, vorzugsweise in bedarfsgerechter Art und Weise aus einem der Reiheneinheit und/oder der Verteilmaschine zugeordneten Vorratsbehälter, zuzubringen und innerhalb der vom Furchenöffnungselement ausgebildeten Furche abzulegen. In der Regel ist einer derartigen Materialablagevorrichtung wenigstens eine pneumatische und/oder mechanische Dosiervorrichtung, insbesondere nach Art einer Vereinzelung, und/oder wenigstens eine Ausbringleitung, insbesondere nach Art eines Schussrohrs, zugeordnet.

Des Weiteren umfasst eine solche Reiheneinheit auch zumindest ein Furchenverschließungs- und/oder Andrückelement, welches relativ zum Rahmen und/oder zum Furchenöffnungselement gesehen in vertikaler Richtung beweglich und in einer Arbeitsrichtung der Reiheneinheit, insbesondere beabstandet, hinter dem Furchenöffnungselement angeordnet ist. Ein derartiges Furchenverschließungs- und/oder Andrückelement ist dazu eingerichtet, die geöffnete und/oder ausgebildete Furche zumindest teilweise wieder zu verschließen und/oder anzudrücken. Häufig sind derartige Furchenverschließungs- und/oder Andrückelemente auch nach Art wenigstens einer oder mehrerer Andruckrollen ausgebildet, welche insbesondere v-förmig zueinander angeordnet und/oder ausgerichtet sind.

Eine entsprechende Reiheneinheit ist beispielsweise in der EP 1 461 988 B1 oder der DE 10 2017 102 671 A1 beschrieben.

Um den stetig steigenden Anforderung hinsichtlich der Ablagegenauigkeit, insbesondere der Erträge, Rechnung zu tragen, wird eine von den Ackerbodenverhältnissen abhängige teilflächenspezifische Ablage des granularen Materials immer wichtiger. Beispielsweise kann es aufgrund der Triebkraft der auszubringen Materialien bei schweren bzw. harten Böden erforderlich sein das Material möglichst flach mit geringerer Ablagetiefe in den Ackerboden einzubringen, während bei leichten bzw. lockeren Böden eher tiefere Ablagetiefen erwünscht und/oder möglich sind. Ist die Ablagetiefe eines als Saatgut ausgeführten Materials zu tief, reicht die Triebkraft für gewöhnlich nicht aus und das abgelegte Saatgut bzw. der Keimling stirbt ab oder weißt eine negativ beeinträchtigte Jungenentwicklung auf. Ist die Ablagetiefe jedoch zu flach bzw. zu gering, besteht die Gefahr, dass das als Saatgut ausgeführte Material vertrocknet und/oder aufgrund von äußerlichen und/oder umwelttechnischen Bedingungen nicht am vorgesehenen Ablageort verbleibt.

Aus diesem Grund Bedarf es vermehrt an Reiheneinheiten, welche während des Arbeitsvorgangs möglichst präzise und/oder bedarfsgerecht, insbesondere teilflächenspezifisch, entlang der Nutzfläche einstellbar und/oder regelbar sind.

Hierzu wird in der aktuellen Praxis vermehrt die Ablagetiefe und/oder Bedeckungshöhe des durch die Reiheneinheit in der Furche abgelegten und/oder vom Ackerboden bedeckten granularen Materials erfasst und/oder bestimmt. Einer modernen Reiheneinheit ist hierfür für gewöhnlich eine elektronische Auswertevorrichtung mit wenigstens einer Sensoreinrichtung zugeordnet, welche dazu eingerichtet, die Ablagetiefe und/oder Bedeckungshöhe des granularen Materials während des Arbeitsvorgangs zu erfassen und/oder zu bestimmen.

Die Druckschrift EP 3 704 926 A1 schlägt hierzu die Verwendung einer Sensoreinrichtung mit wenigstens einem berührungslos erfassenden Sensoren vor, welcher an der Reiheneinheit angeordnet ist. Der wenigstens eine Sensor ist dabei in Arbeitsrichtung gesehen vor dem Furchenöffnungselement auf den Ackerboden und/oder hinter dem Furchenöffnungselement auf die ausgebildete Furche ausgerichtet und dazu eingerichtet, den Ackerboden und/oder die geöffnete Furche abzutasten.

Aus den Druckschriften US 2017/0359945 A1 und/oder EP 3 300 565 B1 ist ferner eine Auswertevorrichtung mit wenigstens einer Sensoreinrichtung bekannt, mittels der eine relative Lage und/oder Position wenigstens eines optionalen und im Bereich des Furchenöffnungselements angeordneten, insbesondere nach Art einer Tiefenführungsrolle ausgebildeten, Tiefenführungselements erfassbar und/oder bestimmbar ist. Die Auswertevorrichtung ist dabei dazu eingerichtet, aus der relativen Lage und/oder Position des Tiefenführungselements auf die Ablagetiefe und/oder Bedeckungshöhe des dahinter abgelegten granularen Materials zu schließen.

Problematisch bei derartig ausgeführten Reiheneinheiten ist, dass die Ablagetiefe und/oder Bedeckungshöhe erfasst und/oder bestimmt wird, noch bevordie Furche und/oder das granulare Material wieder mit Ackerboden bedeckt bzw. verschlossen ist. Die aus dem Verschließen und/oder Andrücken der Furche resultierenden Ackerbodenbewegungen bzw. Ackerbodenströme bleiben hierbei beim Erfassen und/oder Bestimmen der Ablagetiefe und/oder Bedeckungshöhe zumindest im Wesentlichen unberücksichtigt.

Darüber hinaus sind aus den Druckschriften DE 10 2004 011 302 A1 und/oder US 2020/0146200 A1 Reiheneinheiten für landwirtschaftliche Verteilmaschinen bekannt, bei denen wenigstens ein Sensor der Sensoreinrichtung auf die bereits bedeckte und/oder angedrückte Furche ausgerichtet ist.

Derartige Konstruktionen von Reiheneinheiten haben den Nachteil, dass sie besonders aufwendig sind. Des Weiteren wirken sich hierbei auch die Ackerbodenbewegungen nachteilig auf die Sensoreinrichtung, insbesondere Sensoren, aus. Diese können durch den Ackerboden besonders schnell verschmutzen, was sich wiederrum negativ auf die Betriebssicherheit derartiger Messprinzipien bzw. derartig ausgeführter Sensoreinrichtungen auswirkt.

In einer Vielzahl von Anwendungsbereichen könnte die Arbeitsqualität derartiger Reiheneinheiten jedoch weiter verbessert werden, wenn die Ablagetiefe und/oder Bedeckungshöhe in einfacher Weise mit noch höherer Präzision erfasst und/oder bestimmt werden kann. Die der Erfindung zugrunde liegende Aufgabe besteht somit darin, die Präzision bei der Erfassung und/oder Bestimmung der Ablagetiefe und/oder Bedeckungshöhe in besonders einfacher und/oder betriebssicherer Art und Weise weiter zu erhöhen.

Diese Aufgabe wird erfindungsgemäß dadurch gelöst, dass die Sensoreinrichtung wenigstens einen dem Furchenverschließungs- und/oder Andrückelement zugeordneten ersten Sensor umfasst, welcher dazu eingerichtet ist, eine relative Lage und/oder Position des Furchenverschließungs- und/oder Andrückelements hinsichtlich des Rahmens und/oder Furchenöffnungselements zu erfassen, wobei die Auswertevorrichtung dazu eingerichtet ist, die relative Lage und/oder Position des Furchenverschließungs- und/oder Andrückelements zur Bestimmung der Ablagetiefe und/oder Bedeckungshöhe zu berücksichtigen.

Die Erfindung macht sich die Erkenntnis zunutze, dass die von der Reiheneinheit, insbesondere dem Furchenöffnungselement, verursachten Ackerbodenbewegungen bzw. Ackerbodenströme im Bereich des Furchenverschließungs- und/oder Andrückelements weitestgehend und/oder zumindest nahezu abgeschlossen sind. Die während oder kurz nach dem Verschließen und/oder Andrücken der Furche resultierende Ablagetiefe und/oder Bedeckungshöhe des granularen Materials entspricht somit zumindest nahezu der nach dem Arbeitsvorgang schlussendlich bzw. endgültig erreichten Ablagetiefe und/oder Bedeckungshöhe. Eine derartige Erfassung über das Furchenverschließungs- und/oder Andrückelement hat damit für die Bestimmung der Ablagetiefe und/oder Bedeckungshöhe des granularen Materials eine erhebliche Steigerung hinsichtlich der Präzision zur Folge. Um die Ablagetiefe und/oder Bedeckungshöhe hierbei besonders gut bzw. genau bestimmen zu können ist der wenigstens eine erste Sensor bevorzugt dazu eingerichtet, die relative Lage und/oder Position des Furchenverschließungs- und/oder Andrückelements während und/oder unmittelbar nach dem Verschließen und/oder Andrücken der unterhalb des Furchenverschließungs- und/oder Andrückelements befindlichen Furche zu erfassen. Ferner bevorzugt ist der wenigstens eine erste Sensor dazu eingerichtet, auf der Basis der erfassten Lage und/oder Position des Furchenverschließungs- und/oder Andrückelements wenigstens ein erstes Messsignal zu generieren und, insbesondere mittels wenigstens einer signalleitenden und/oder -übertragenden Verbindung, an die zugeordnete Auswertevorrichtung zu übertragen. In bevorzugter Weise wird dann von der Auswertevorrichtung anhand der erfassten Lage und/oder Position des Furchenverschließungs- und/oder Andrückelements, insbesondere anhand des Messsignals, die Ablagetiefe und/oder Bedeckungshöhe des granularen Materials, bestimmt. Das Bestimmen der Ablagetiefe und/oder Bedeckungshöhe ist während des Arbeitsvorgangs besonders bevorzugt fortlaufend und/oder wiederholend, insbesondere in diskreten Schritten an einer Vielzahl von Punkten, entlang der Furche ausführbar. Durch eine derartige Ausführungsform ist eine besonders präzise Erfassung und/oder Bestimmung der Ablagetiefe und/oder Bedeckungshöhe erreichbar.

Die erfindungsgemäße Maßnahme hat des Weiteren den Vorteil, dass dadurch das Furchenverschließungs- und/oder Andrückelement sowohl zum Verschließen und/oder Andrücken der Furche als auch zum Erfassen und/oder Bestimmen der Ablagetiefe und/oder Bedeckungshöhe verwendbar ist. Weiterhin ist dabei Vorteilhaft, dass der wenigstens eine erste Sensor verhältnismäßig weit beabstandet zur Furche und/oder und/oder dem Ackerboden, insbesondere innerhalb der Reiheneinheit angeordnet, werden kann, womit Verschmutzungen an der Sensoreinrichtung, insbesondere am wenigstens einen ersten Sensor, zumindest nahezu ausgeschlossen sind. Hierdurch ist die Betriebssicherheit der Reiheneinheit, insbesondere der Sensoreinrichtung, erheblich gesteigert.

Die Auswertevorrichtung ist darüber hinaus bevorzugt an der Verteilmaschine und/oder an einer mit der Verteilmaschine koppelbaren Zugmaschine, insbesondere einem Schlepper, angeordnet. Alternativ oder zusätzlich kann die Auswertevorrichtung in ein Steuer- und/oder Regelsystem der Verteil- und/oder Zugmaschine, insbesondere nach Art eines Terminals und/oder Bordrechners, integriert sein. Des Weiteren kann die wenigstens eine Auswertevorrichtung auch an der zumindest einen Reiheneinheit angeordnet sein.

In einer bevorzugten Ausführungsform der erfindungsgemäßen Reiheneinheit ist das Furchenverschließungs- und/oder Andrückelement um eine zumindest im Wesentlichen quer zur Arbeitsrichtung ausgerichtete Schwenkachse schwenkbar mit dem Rahmen und/oder Furchenöffnungselement gekoppelt. Insbesondere ist das Furchenverschließungs- und/oder Andrückelement hierbei derart mit einem am Rahmen der Reiheneinheit und/oder am Furchenöffnungselement ausgebildeten Anlenkpunkt verbunden, dass es dazu eingerichtet ist, einem Boden- bzw. Höhenprofil des Ackerbodens zu folgen und/oder Hindernissen, wie beispielsweise Steinen, entlang der Nutzfläche auszuweichen. Mit anderen Worten ist das Furchenverschließungs- und/oder Andrückelement hierbei derart mit einem Anlenkpunkt an der Reiheneinheit verbunden, das es in vertikaler Richtung gesehen nach oben oder unten hin auslenkenkbar bzw. verschwenkbar ist. Darüber hinaus ist der wenigstens eine erste Sensor hierbei dazu eingerichtet, eine Verschwenkung, vorzugsweise einen Verschwenkungswinkel, des Furchenverschließungs- und/oder Andrückelements um die Schwenkachse zu erfassen. Der wenigstens eine erste Sensor ist hierbei ferner bevorzugt direkt im Bereich der Schwenkachse des Furchenverschließungs- und/oder Andrückelements angeordnet. Alternativ oder zusätzlich kann der wenigstens eine Sensor auch beabstandet zur Schwenkachse und/oder auf das Furchenverschließungs- und/oder Andrückelement ausgerichtet angeordnet sein, wobei die Verschwenkung, insbesondere der Verschwenkungswinkel, hierbei indirekt, insbesondere unter Berücksichtigung der Geometrie des Furchenverschließungs- und/oder Andrückelements und/oder einer Hebellänge zur Schwenkachse, erfassbar ist. Der wenigstens eine erste Sensor kann beispielsweise nach Art zumindest eines Drehwinkelsensors oder aus einem oder mehreren berührungslos erfassenden und einander zugeordneten Sensoren ausgebildet sein. Weiterhin kann alternativ oder zusätzlich zwischen dem wenigstens einen Sensor und der Schwenkachse wenigstens eine Übersetzung, insbesondere nach Art eines Getriebes, vorgesehen sein.

Bevorzugt umfasst die Reiheneinheit wenigstens ein relativ zum Rahmen verstellbares Tiefenführungselement, insbesondere nach Art einer Tiefenführungsrolle, welches dem Furchenöffnungselement und/oder der Materialablagevorrichtung zugeordnet ist. Besonders bevorzugt umfasst das Tiefenführungselement wenigstens eine in Fahrt- bzw. Arbeitsrichtung gesehen jeweils links und rechts bzw. seitlich vom Furchenöffnungselement angeordnete Tiefenführungsrollen. Das Tiefenführungselement ist dabei dazu eingerichtet, eine Eindringtiefe des Furchenöffnungselements und/oder der Materialablagevorrichtung in den Ackerboden und damit die Ablagetiefe und/oder die Bedeckungshöhe des granularen Materials in direkter Weise zu beeinflussen. Das Tiefenführungselement ist besonders bevorzugt schwenkbar am Rahmen der Reiheneinheit angelenkt.

In einer Weiterbildung der erfindungsgemäßen Reiheneinheit umfasst die Sensoreinrichtung wenigstens einen dem Tiefenführungselement zugeordneten zweiten Sensor, welcher dazu eingerichtet ist, eine relative Lage und/oder Position des Tiefenführungselements zum Rahmen zu erfassen. Der wenigstens eine zweite Sensor ist hierbei vorzugsweise dazu eingereicht, wenigstens ein zweites Messsignal in Abhängigkeit der erfassten Lage und/oder Position des Tiefenführungselements zu generieren. Die Auswertevorrichtung ist hierbei dazu eingerichtet, die relative Lage und/oder Position des Tiefenführungselements, insbesondere das zweite Messsignal, zur Bestimmung der Ablagetiefe und/oder Bedeckungshöhe zu berücksichtigen. Besonders bevorzugt ist die Auswertevorrichtung dazu eingerichtet, sowohl das wenigstens eine erste Messsignal des zumindest einen ersten Sensors als auch das wenigstens eine zweite Messsignal des zumindest einen zweiten Sensors zur Bestimmung der Ablagetiefe und/oder Bedeckungshöhe zu berücksichtigen. Durch eine derartige Ausführungsform ist die Ablagetiefe und/oder Bedeckungshöhe mit noch weiter gesteigerter Präzision und/oder Zuverlässigkeit bestimmbar. Darüber hinaus sind die Messsignale der unterschiedlichen Sensoren hierbei auch bevorzugt für eine Plausibilitätsprüfung miteinander vergleichbar.

In einer anderen bevorzugten Ausführungsform der erfindungsgemäßen Reiheneinheit umfasst die Sensoreinrichtung wenigstens einen dem Rahmen, der Materialablagevorrichtung und/oder dem Furchenverschließungs- und/oder Andrückelement zugeordneten Abstandssensor, wobei der Abstandssensor dazu eingereicht ist, wenigstens einen Abstand zum Ackerboden, insbesondere zur Furche, zu erfassen. Der wenigstens eine Abstandssensor kann je nach Ausführungsvariante direkt oder mittels einer Haltevorrichtung am Rahmen, an der Materialablagevorrichtung und/oder am Furchenverschließungs- und/oder Andrückelement angeordnet sein. Je nach Ausführungsvariante ist somit bevorzugt der Ackerboden, die geöffnete bzw. ausgebildete und/oder die wieder verschlossene bzw. bedeckte Furche mittels dem wenigstens einen Abstandssensoren erfassbar. Der Abstandssensor ist darüber hinaus bevorzugt nach unten hin bzw. zum Boden hin ausgerichtet und vorzugsweise dazu eingereicht, den Ackerboden und/oder die Furche berührungsfrei abzutasten. Der Abstandssensor kann hierbei beispielsweise auch nach Art eines Radar- oder Ultraschallsensoren ausgebildet sein. Bei einer derartigen Ausführungsform ist die Auswertevorrichtung dazu eingerichtet, den wenigstens einen Abstand zur Bestimmung der Ablagetiefe und/oder Bedeckungshöhe zu berücksichtigen. Die somit erreichte Vielzahl unterschiedlicher Sensortypen erreicht eine besonders hohe Präzision bei der Bestimmung der Ablagetiefe und/oder Bedeckungshöhe.

Darüber hinaus ist der Reiheneinheit bevorzugt wenigstens ein elektronisches Steuer- und/oder Regelsystem zugeordnet, welches insbesondere mit der Auswertevorrichtung und/oder der Sensoreinrichtung verbunden ist.

In einer anderen Weiterbildung der erfindungsgemäßen Reiheneinheit umfasst die Reiheneinheit zumindest einen Aktor zum Verstellen bzw. Anpassen der Ablagetiefe und/oder der Bedeckungshöhe. Das zugeordnete Steuer- und/oder Regelsystem ist dabei dazu eingerichtet, den Aktor auf Basis der bestimmten Ablagetiefe und/oder Bedeckungshöhe zu steuern und/oder zu regeln. Der Aktor kann hierbei beispielsweise nach Art eines Drehantriebs und/oder eines längenveränderlichen Stellantriebs ausgebildet sein. Insbesondere kann der Aktor mittels elektrischer, pneumatischer oder hydraulischer Stellenergie betreibbar und/oder verstellbar sein. Weicht die bestimmte Ablagetiefe und/oder Bedeckungshöhe beispielsweise von einem vorgebbaren und/oder abrufbaren Sollwert bzw. Sollbereich ab, kann die Ablagetiefe und/oder Bedeckungshöhe mittels des Aktors in Richtung des Sollwerts bzw. Sollbereichs angepasst bzw. erhöht oder verringert werden. Der Aktor ist hierbei vorzugsweise manuell, insbesondere in fernbetätigter Weise, von einem Bediener und/oder automatisiert vom Steuer- und/oder Regelsystem steuer- und/oder regelbar.

In einer weiteren bevorzugten Ausführungsform der erfindungsgemäßen Reiheneinheit ist der Aktor zwischen dem Rahmen und dem Tiefenführungselement angeordnet und dazu eingerichtet, die relative Lage und/oder Position des Tiefenführungselements zu beeinflussen. Insbesondere ist der wenigstens eine Aktor hierbei einerseits mit dem Rahmen und andererseits mit dem Tiefenführungselement, vorzugsweise einer Haltevorrichtung bzw. eines Tragarms des Tiefenführungselements, verbunden.

In einer weiteren Weiterbildung der erfindungsgemäßen Reiheneinheit umfasst die Sensoreinrichtung wenigstens einen dem Rahmen zugeordneten dritten Sensor, welcher dazu eingerichtet ist, eine relative Lage und/oder Position, insbesondere einen Winkel, des Rahmens zum Ackerboden und/oder einem der Verteilmaschine zugeordneten Maschinenrahmen zu erfassen. Der wenigstens eine dritte Sensor kann hierbei beispielsweise einen Winkel oder eine Auslenkung zwischen dem Rahmen der Reiheneinheit und dem Ackerboden erfassen. Alternativ oder zusätzlich kann der wenigstens eine dritte Sensor auch einen Winkel oder eine Auslenkung zwischen dem Rahmen der Reiheneinheit und dem Maschinenrahmen der Verteilmaschine erfassen. Die Auswertevorrichtung ist hierbei dazu eingerichtet, die relative Lage und/oder Position, insbesondere den Winkel, des Rahmens zur Bestimmung der Ablagetiefe und/oder Bedeckungshöhe zu berücksichtigen.

Die Reiheneinheit, insbesondere das Furchenöffnungselement und/oder das Furchenverschließungs- und/oder Andrückelement, ist darüber hinaus bevorzugt in Abhängigkeit wenigstens eines Einstellparameters mit einstellbarem und/oder bedarfsgerechtem Anpressdruck gegen den Ackerboden andrückbar. Der Anpressdruck kann hierbei vorzugsweise auch als Schardruck angesehen werden, mit dem die Reiheneinheit oder die bodenberührenden Teile der Reiheneinheit gegen den Ackerboden andrückbar sind.

Darüber hinaus ist eine erfindungsgemäße Reiheneinheit bevorzugt, bei der die Auswertevorrichtung dazu eingerichtet ist, Bewegungen der Reiheneinheit und/oder ein Bodenprofil des Ackerbodens in Abhängigkeit wenigstens eines Messsignals der Sensoreinrichtung, insbesondere wenigstens eines Sensoren, zu erfassen und/oder zu bestimmen. Die Auswertevorrichtung ist dabei vorzugsweise dazu eingerichtet, den wenigstens einen Einstellparameterfür den Anpressdruck in Abhängigkeit der Bewegungen und/oder des Bodenprofils vorzugeben und/oder einzustellen. Vorzugsweise wird hierbei das Messsignal des wenigstens einen ersten, insbesondere am Furchenverschließungs- und/oder Andrückelement angeordneten, Sensoren von der Auswertevorrichtung berücksichtigt. Alternativ oder zusätzlich kann hierbei auch zumindest ein weiteres Messsignal, des zweiten und/oder dritten Sensores und/oder des Abstandssensoren, berücksichtigt und/oder mit dem ersten Messsignal abgeglichen werden. Unter derartigen Bewegungen sind insbesondere Auslenkungen der Reiheneinheit zu verstehen, welche in vertikaler Richtung nach oben oder unten hin und relativ zum Ackerboden gerichtet sind. Insbesondere können hierunter auch Schwingungen der Reiheneinheit verstanden werden. Unter dem Bodenprofil können beispielsweise ein Höhenprofil oder der Grad von Unebenheiten entlang des Ackerbodens verstanden werden. Bei verhältnismäßig großen Bewegungen der Reiheneinheit und/oder großen Schwankungen im Bodenprofil kann beispielsweise ein hoher bzw. höherer Anpressdruck eingestellt werden, während bei kleinen bzw. geringen Bewegungen der Reiheneinheit und/oder geringen Schwankungen im Bodenprofil beispielsweise ein kleiner bzw. kleinerer Anpressdruck eingestellt werden kann. Der Anpressdruck ist hierbei vorzugsweise in automatisierter Weise vom Steuer- und/oder Regelsystem einstellbar und/oder beeinflussbar.

Des Weiteren ist vorzugsweise eine landwirtschaftliche Verteilmaschine vorgesehen, an der wenigstens eine Reiheneinheit angeordnet ist, welche nach zumindest einer der bevorzugten Ausführungsformen der erfindungsgemäßen Reiheneinheit ausgebildet ist. Besonders bevorzugt umfasst die Verteilmaschine mehrere quer zur Fahrt- bzw. Arbeitsrichtung nebeneinander angeordneter Reiheneinheiten, welche vorzugsweise einzeln oder gruppenweise am Maschinenrahmen der Verteilmaschine angelenkt sind. Besonders bevorzugt kann jeweils eine Reiheneinheit über eine an sich bekannte Parallelogrammaufhängung mit dem Maschinenrahmen verbunden sein.

Die der Erfindung zugrunde liegende Aufgabe wird ebenso mit einem Verfahren zum Ablegen von granularem Material gelöst, wobei eine relative Lage und/oder Position des Furchenverschließungs- und/oder Andrückelements hinsichtlich des Rahmens und/oder Furchenöffnungselements mittels wenigstens einem ersten Sensor der Sensoreinrichtung erfasst wird, welcher dem Furchenverschließungs- und/oder Andrückelement zugeordnet ist. Die relative Lage und/oder Position des Furchenverschließungs- und/oder Andrückelements wird dabei zur Bestimmung der Ablagetiefe und/oder Bedeckungshöhe von der Auswertevorrichtung berücksichtigt. Hinsichtlich der Vorteile und Modifikationen des erfindungsgemäßen Verfahrens wird zunächst auf die Vorteile und Modifikationen der erfindungsgemäßen Reiheneinheit verwiesen.

Die Reiheneinheit ist hierbei vorzugsweise nach zumindest einer der bevorzugten Ausführungsformen der erfindungsgemäßen Reiheneinheit ausgebildet.

Zum Ablegen des granularen Materials wird innerhalb des erfindungsgemäßen Verfahrens eine Ablagetiefe und/oder Bedeckungshöhe für das granulare Material eingestellt. Weiterhin wird dabei eine Furche entlang eines Ackerbodens der Nutzfläche mittels zumindest eines Furchenöffnungselements, welches mit einem Rahmen der Reiheneinheit gekoppelt ist, ausgebildet und/oder geöffnet. Das granulare Material wird mittels wenigstens einer Materialablagevorrichtung zugebracht und innerhalb der Furche abgelegt. Die Furche wird anschließend mittels wenigstens einem Furchenverschließungs- und/oder Andrückelement, welches relativ zum Rahmen und/oder Furchenöffnungselement gesehen in vertikaler Richtung beweglich und in einer Arbeitsrichtung der Reiheneinheit, vorzugsweise beabstandet, hinter dem Furchenöffnungselement angeordnet ist, verschlossen und/oder angedrückt. Des Weiteren wird eine Ablagetiefe und/oder Bedeckungshöhe des in der Furche abgelegten und/oder bedeckten granularen Materials mittels einer zugordneten elektronischen Auswertevorrichtung, die wenigstens eine Sensoreinrichtung umfasst, erfasst und/oder bestimmt. Weiterhin wird auf der Basis der von der Auswertevorrichtung bestimmten Ablagetiefe und/oder Bedeckungshöhe, vorzugsweise wenn die bestimmte Ablagetiefe und/oder Bedeckungshöhe einen vorgegebenen Sollwert überschreitet, die Ablagetiefe und/oder Bedeckungshöhe des granularen Materials angepasst.

In einer bevorzugten Ausführungsform des erfindungsgemäßen Verfahrens umfasst die Sensoreinrichtung wenigstens einen Abstandssensor, der einen Abstand zum Ackerboden, insbesondere zur Furche, erfasst, wobei der Abstand von der Auswertevorrichtung zur Bestimmung der Ablagetiefe und/oder Bedeckungshöhe berücksichtigt wird.

Bei einer besonders bevorzugten Ausführungsform des erfindungsgemäßen Verfahrens umfasst die Sensoreinrichtung wenigstens einen dem Tiefenführungselement zugeordneten zweiten Sensor, der eine relative Lage und/oder Position des Tiefenführungselements zum Rahmen erfasst, wobei die relative Lage und/oder Position des Tiefenführungselements von der Auswertevorrichtung zur Bestimmung der Ablagetiefe und/oder Bedeckungshöhe berücksichtigt wird.

In einer besonders bevorzugten Weiterbildung der erfindungsgemäßen Reiheneinheit ist dem Rahmen und/oder dem Tiefenführungselement wenigstens ein Aktor zum Verstellen der Ablagetiefe und/oder Bedeckungshöhe zugeordnet, wobei das Steuer- und/oder Regelsystem den Aktor auf der Basis der bestimmten Ablagetiefe und/oder Bedeckungshöhe steuert und/oder regelt.

Bei einer weiteren besonders bevorzugten Ausführungsform des erfindungsgemäßen Verfahrens umfasst die Sensoreinrichtung wenigstens einen dem Rahmen zugeordneten dritten Sensor, der eine relative Lage und/oder Position, insbesondere einen Winkel, des Rahmens zum Ackerboden und/oder einem der Verteilmaschine zugeordneten Maschinenrahmen erfasst, wobei die relative Lage und/oder Position, insbesondere der Winkel, des Rahmens von der Auswertevorrichtung zur Bestimmung der Ablagetiefe und/oder Bedeckungshöhe berücksichtigt wird.

In einer weiteren besonders bevorzugten Weiterbildung des erfindungsgemäßen Verfahrens werden Bewegungen der Reiheneinheit und/oder ein Bodenprofil des Ackerbodens von der Auswertevorrichtung in Abhängigkeit wenigstens eines Messsignals der Sensoreinrichtung, insbesondere wenigstens eines Sensoren, erfasst und/oder bestimmt, wobei vorzugsweise der wenigstens eine Einstellparameter für den Anpressdruck von der Auswertevorrichtung in Abhängigkeit der erfassten und/oder bestimmten Bewegungen der Reiheneinheit und/oder des Bodenprofils vorgegeben und/oder eingestellt wird.

Weitere Einzelheiten der Erfindung sind der Beispielsbeschreibung und den Zeichnungen zu entnehmen. Die Zeichnungen zeigen
- Fig.1: eine Reiheneinheit für eine landwirtschaftliche Verteilmaschine in einer Seitenansicht;
- Fig.2A: einen unterer Bereich der Reiheneinheit in vergrößerter Ansicht und einem ersten Ausführungsbeispiel einer erfindungsgemäßen Sensoreinrichtung;
- Fig.2B: die Reiheneinheit und die Sensoreinrichtung aus Fig.2A mit einem verschwenkten Furchenverschließungs- und/oder Andrückelement;
- Fig.3: den unterer Bereich der Reiheneinheit und ein zweites Ausführungsbeispiel der erfindungsgemäßen Sensoreinrichtung; und
- Fig.4: den unterer Bereich der Reiheneinheit und ein drittes Ausführungsbeispiel der erfindungsgemäßen Sensoreinrichtung.

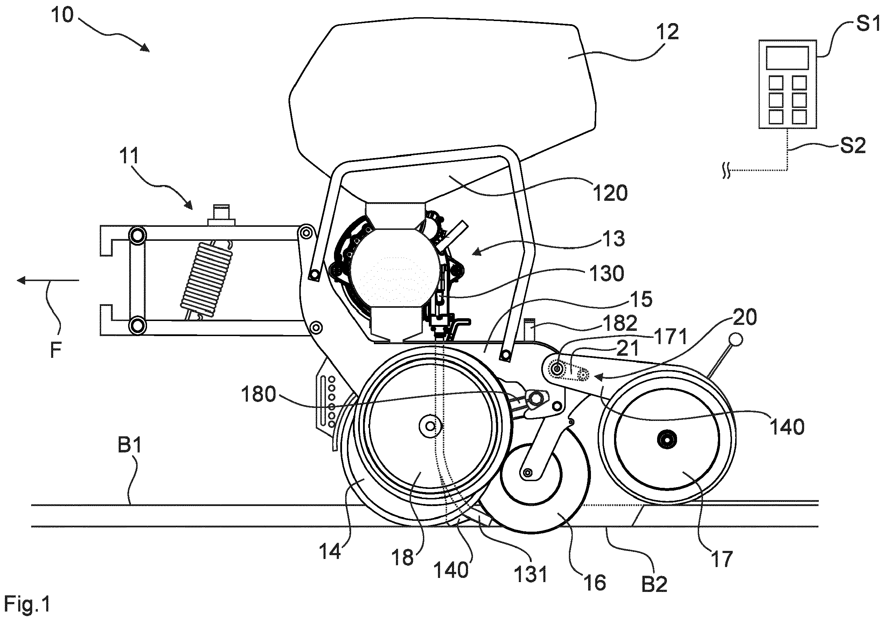

Eine an einer nicht dargestellten landwirtschaftlichen Verteilmaschine, insbesondere Sämaschine, angeordnete Reiheneinheit 10 ist in der Fig.1 gezeigt. An einem ebenfalls nicht gezeigten Maschinenrahmen der Verteilmaschine sind quer zur Fahrt- bzw. Arbeitsrichtung F gesehen eine Vielzahl derartiger Reiheneinheiten 10 beabstandet zueinander angeordnet. Die als Säaggregat, insbesondere Einzelkornsäaggregat, ausgebildete Reiheneinheit 10 ist hierbei über eine Prarallelogrammaufhängung 11 am Maschinerahmen angelenkt.

Die Reiheneinheit 10 umfasst in diesem Ausführungsbeipiel einen Vorratsbehälter 12, welcher zum Vorhalten und/oder Bevorraten von granularem Material M, insbesondere Saatgut und/oder Dünger, vorgesehen ist. Weiterhin ist an einem unteren Auslauf 120 des Vorratsbehälters 12 eine Materialablagevorrichtung 13 angeordnet. Die dargestellte Materialablagevorrichtung 13 weist eine Dosiervorrichtung 130, insbesondere eine Kornvereinzelungsvorrichtung, und eine daran anschließende Ausbringleitung 131, insbesondere nach Art eines Schussrohrs, auf. In einer zur gezeigten Alternativen Ausführungsform kann der Vorratsbehälter 12, insbesondere nach Art eines zentralen Bevorratungsspeichers, alternativ oder zusätzlich an der nicht gezeigten Verteilmaschine angeordnet sein. Weiterhin kann alternativ oder zusätzlich zwischen der Verteilmaschine und der Reiheneinheit 10 ein pneumatisches Fördersystem vorgesehen sein, welches dazu geeignet ist, das granulare Material M in einstellbarer und/oder bedarfsgerechter Weise zum Vorratsbehälter 12 und/oder zur Materialablagevorrichtung 13 zuzubringen.

Unterhalb und/oder entlang der Materialablagevorrichtung 13 ist des Weiteren ein Furchenöffnungselement 14 angeordnet, welches nach Art eines Schars, insbesondere Scheiben- bzw. Doppelscheibenschars, ausgebildet ist. Alternativ oder zusätzlich dazu kann das Furchenöffnungselement 14 auch als Meißelschar ausgebildet sein. Ferner können in Fahrtrichtung F vor dem Furchenöffnungselement 14 auch weitere bzw. vorlaufende Schare vorgesehen sein. Das dargestellte Furchenöffnungselement 14 ist hierbei mit dem Rahmen 15 der Reiheneinheit 10 gekoppelt und dazu eingerichtet, eine Furche B2 entlang eines Ackerbodens B1 der Nutzfläche zu öffnen und/oder auszubilden. Alternativ oder zusätzlich ist in Fahrtrichtung F hinter dem Furchenöffnungselement 14 ein Furchenformer 140 angeordnet. Weiterhin ist das granulare Material M mittels der Materialablagevorrichtung 13 in bedarfsgerechter Weise über die Ausbringleitung 131 zur Furche B2 zubringbar und dabei entlang der Furche B2 ablegbar. In Fahrtrichtung F hinter dem Furchenöffnungselement 14 und/oder der Materialablagevorrichtung 13 ist hierbei ein optionales Fangelement 16, insbesondere nach Art einer Fangrolle, vorgesehen, welches dazu eingerichtet ist, das in der Furche B2 ablegbare granulare Material M innerhalb der Furche B2 zu platzieren und/oder zu verfestigen.

Des Weiteren umfasst die Reiheneinheit 10 ein Furchenverschließungs- und/oder Andrückelement 17, welches relativ zum Rahmen 15 und/oder zum Furchenöffnungselement 14 gesehen in vertikaler Richtung beweglich und in Arbeitsrichtung F der Reiheneinheit 10, vorzugsweise beabstandet, hinter dem Furchenöffnungselement 14 angeordnet ist. Das Furchenverschließungs- und/oder Andrückelement 17 ist hierbei beispielhaft nach Art einer Andruckrolle, insbesondere als v-förmig geneigte Doppelrolle, ausgebildet und über einen Schwenkarm 170 um eine zumindest im Wesentlichen quer zur Arbeitsrichtung F ausgerichtete Schwenkachse 171 schwenkbar am Rahmen 15 angelenkt. Alternativ oder zusätzlich dazu kann das Furchenverschließungs- und/oder Andrückelement 17 auch am Furchenöffnungselement 14 schwenkbar angeordnet sein. Das abgebildete Furchenverschließungs- und/oder Andrückelement 17 ist dazu eingerichtet, die mittels des Furchenöffnungselements 14 geöffnete und/oder ausgebildete Furche B2 in an sich bekannter Weise wieder zu verschließen und/oder anzudrücken.

Darüber hinaus ist der Reiheneinheit 10 eine elektronische Auswertevorrichtung S1 mit einer Sensoreinrichtung 20 zugeordnet, welche dazu eingerichtet, eine Ablagetiefe und/oder Bedeckungshöhe H1, H2 des in der Furche B2 abgelegten und/oder bedeckten granularen Materials M zu erfassen und/oder bestimmen. Hierzu umfasst die Sensoreinrichtung 20 erfindungsgemäß einen dem Furchenverschließungs- und/oder Andrückelement 17 zugeordneten ersten Sensor 21. Der erste Sensor 21 ist dazu eingerichtet, eine relative Lage und/oder Position, insbesondere einen Winkel **a, des Furchenverschließungs-** und/oder Andrückelements 17 hinsichtlich des Rahmens 15 und/oder des Furchenöffnungselements 14 zu erfassen. Die über den ersten Sensor 21 erfassbare Lage und/oder Position des Furchenverschließungs- und/oder Andrückelements 17 ist dabei von der Auswertevorrichtung S1 zur Bestimmung der Ablagetiefe und/oder Bedeckungshöhe H1, H2 des granularen Materials M berücksichtigbar. Insbesondere ist hierbei vorgesehen, dass die Ablagetiefe und/oder Bedeckungshöhe H1, H2 des granularen Materials M ausschließlich anhand der vom ersten Sensor 21 erfassbaren Lage und/oder Position des Furchenverschließungs- und/oder Andrückelements 17 von der Auswertevorrichtung S1 bestimmbar ist.

Zum Anpassen der Ablagetiefe und/oder Bedeckungshöhe H1, H2 umfasst die Reiheneinheit 10 ein relativ zum Rahmen 15 verstellbares Tiefenführungselement 18, welches dem Furchenöffnungselement 14 und/oder der Materialablagevorrichtung 13 zugeordnet ist. Das dargestellte Tiefenführungselement 18 umfasst hierbei zwei Tiefenführungsrollen, insbesondere nach Art von Messrädern, welche in Fahrtrichtung F gesehen seitlich bzw. links und rechts vom Furchenöffnungselement 14 angeordnet sind. Alternativ dazu kann das Tiefenführungselement 18 auch nur eine einzige Tiefenführungsrolle umfassen. Das Tiefenführungselement 18, insbesondere jeweils eine Tiefenführungsrolle, ist drehbar an einem Tragarm 180 angeordnet, der um eine zumindest im Wesentlichen quer zur Fahrtrichtung F ausgerichtete horizontale Schwenkachse 181 schwenkbar angelenkt und/oder gelagert ist. Des Weiteren ist der Tragarm 180 und damit das Tiefenführungselement 18 in verstellbarer Weise mit einem manuell Einstellhebel 182 gekoppelt, mittels dem ein Bediener das Tiefenführungselement 18 und damit die Ablagetiefe und/oder Bedeckungshöhe H1, H2 beeinflussen und/oder anpassen kann. Das Tiefenführungselement 18 ist insbesondere dazu eingerichtet, eine Eindringtiefe des Furchenöffnungselements 14 und/oder der Materialablagevorrichtung 13 in den Ackerboden B1 einzustellen und damit die Ablagetiefe und/oder die Bedeckungshöhe H1, H2 des granularen Materials zu beeinflussen.

Zur Bestimmung der tatsächlichen und/oder erreichten Ablagetiefe und/oder Bedeckungshöhe H1, H2 kann die Sensoreinrichtung 20, insbesondere der erste Sensor 21, je nach Bedarf und Ausführungsvariante unterschiedlich ausgebildet und/oder angeordnet sein. Alternativ oder zusätzlich kann der erste Sensor 21 dabei auch durch weitere und/oder zusätzliche Sensoren zur Erfassung und/oder Bestimmung der Ablagetiefe und/oder Bedeckungshöhe H1, H2 ergänzt werden.

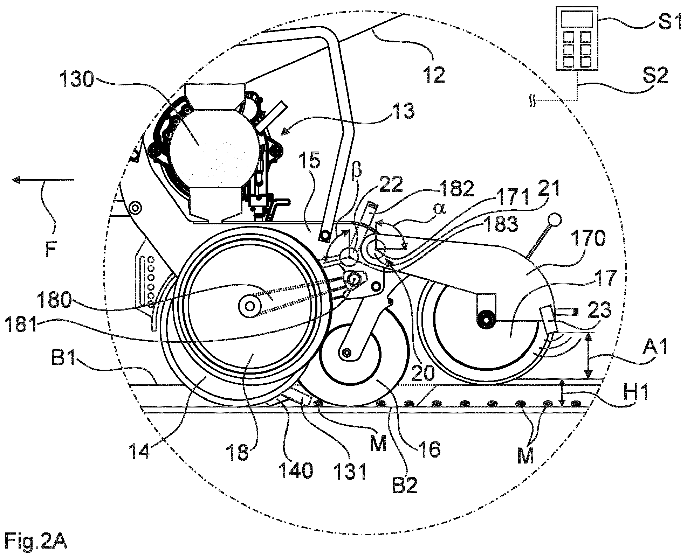

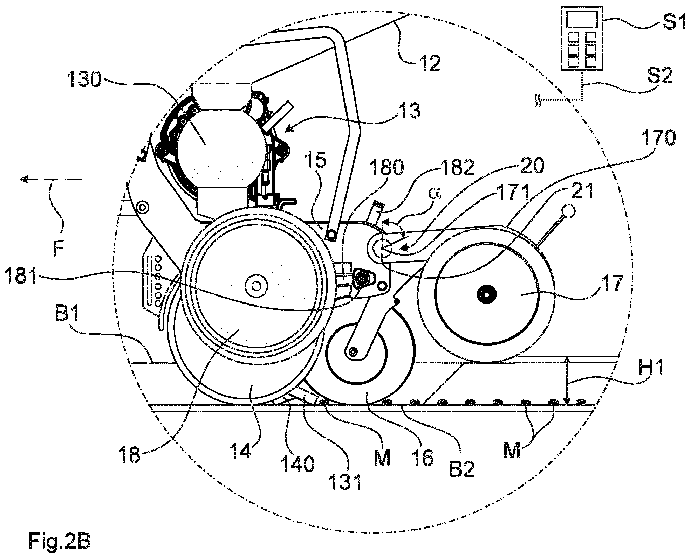

Ein erstes Ausführungsbeispiel zur Anordnung der erfindungsgemäßen Sensoreinrichtung 20 ist beispielsweise in den Fig.2A und 2B gezeigt. Der erste Sensor 21 ist hierbei nach Art eines Drehwinkelsensors ausgebildet und an und/oder mit der Schwenkachse 171 des Furchenverschließungs- und/oder Andrückelements 17, insbesondere des Schwenkarms 170, gekoppelt. Weiterhin ist der erste Sensor 21 hierbei dazu eingerichtet, die Verschwenkung, insbesondere einen Verschwenkungswinkel **α, des Furchenverschließungs-** und/oder Andrückelements 17 um die Schwenkachse 171 zu erfassen. Die über Signalleitungen S2 mit der Sensoreinrichtung 20 verbundene Auswertevorrichtung S1 kann dann hierdurch auf die relative Lage und/oder Position des Furchenverschließungs- und/oder Andrückelements 17 schließen.

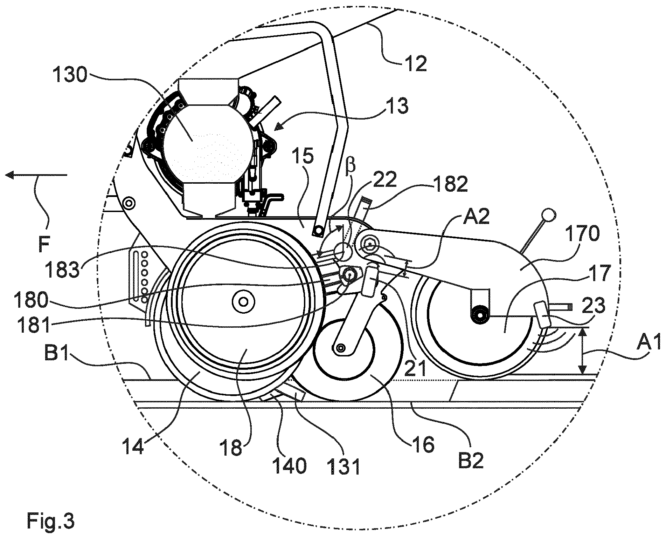

Für eine weitere alternative Ausführungsform zur Ausbildung und/oder Anordnung des ersten Sensoren 21 wird hier explizit auf das in der Fig.3 dargestellte Ausführungsbeispiel verwiesen. Hierbei ist der erste Sensor 21 nach Art eines Abstandssensoren ausgebildet und dazu eingerichtet, einen Abstand A2 zwischen dem ersten Sensor 21 und dem Furchenverschließungs- und/oder Andrückelement 17, insbesondere dem Schwenkarm 170, zu erfassen. Die Auswertevorrichtung S1 ist hierbei dazu eingerichtet, aus dem vom ersten Sensor 21 erfassten Abstand A2 die relative Lage und/oder Position des Furchenverschließungs- und/oder Andrückelements 17 hinsichtlich des Rahmens 15 und/oder des Furchenöffnungselements 14 zu bestimmen. Der hier als Abstandssensor ausgebildete erste Sensor 21 kann alternativ oder zusätzlich zum gezeigten Ausführungsbeispiel selbstverständlich auch an anderen Positionen an der Reiheneinheit 10 angeordnet und dabei auf das Furchenverschließungs- und/oder Andrückelement 17, insbesondere den Schwenkarm 170, ausgerichtet sein. Ferner ist denkbar, dass der erste Sensor 21 in diesem Ausführungsbeispiel dazu eingerichtet ist, den Abstand A2 zwischen dem Fangelement 16, insbesondere der Fangrolle, und dem Furchenverschließungs- und/oder Andrückelement 17 zu erfassen.

Weiterhin ist in den Figuren 2A und 2B zu sehen, dass die schematisch angedeutete Sensoreinrichtung 20 darüber hinaus einen dem Tiefenführungselement 18 zugeordneten zweiten Sensor 22 umfasst, welcher dazu eingerichtet ist, eine relative Lage und/oder Position des Tiefenführungselements 18 zum Rahmen 15 zu erfassen. Hierzu ist der zweite Sensor 22 ebenso nach Art eines Drehwinkelsensors ausgebildet und zum **Erfassen eines Schwenkwinkels β** an einer Schwenkachse 183 des Einstellhebels 182 angeordnet. Die relative Lage und/oder Position des Tiefenführungselements **18 zum Rahmen 15 korrespondiert hierbei mit dem Schwenkwinkel β und damit** mit der Stellung des Einstellhebels 182. Alternativ oder zusätzlich zur gezeigten Ausführungsform kann der zweite Sensor 22 auch direkt an der Schwenkachse 181 des Tiefenführungselements 18 und/oder des Tragarms 180 angeordnet sein.

Des Weiteren ist zu sehen, dass die schematisch angedeutete Sensoreinrichtung 20 wenigstens einen dem Furchenverschließungs- und/oder Andrückelement 17 zugeordneten, insbesondere am Schwenkarm 170 angeordneten, Abstandssensoren 23 umfasst, welcher dazu eingereicht ist, einen Abstand A1 zum Ackerboden B1, insbesondere zur Furche B2, zu erfassen. Der optionale Abstandssensor 23 kann alternativ oder zusätzlich auch am Rahmen 15 und/oder an der Materialablagevorrichtung 13, insbesondere im Bereich der Ausbringleitung 131 oder des Furchenformers 140, angeordnet sein.

Die mit der Sensoreinrichtung 20 signalleitend gekoppelte Auswertevorrichtung S1 ist ferner und/oder je nach Bedarf dazu eingerichtet, die relative Lage und/oder Position des Tiefenführungselements 18 und/oder den Abstand A2 zur Bestimmung der Ablagetiefe und/oder Bedeckungshöhe H1, H2 zu berücksichtigen.

Die Ablagetiefe und/oder Bedeckungshöhe H1, H2 des granularen Materials M variiert je nach der eingestellten relativen Lage und/oder Position des Tiefenführungselements 18 und/oder der Eindringtiefe des Furchenöffnungselements 14 in den Ackerboden B1. Die Fig.2A zeigt eine verhältnismäßig geringe bzw. geringere Eindringtiefe und damit eine eher geringe Ablagetiefe und/oder Bedeckungshöhe H1 für das granulare Material M. Während dessen wird in der Fig.2B eine verhältnismäßig große bzw. größere Eindringtiefe und damit eine eher große Ablagetiefe und/oder Bedeckungshöhe H2 für das granulare Material M gezeigt. Zwischen den Figuren 2A und 2B ist besonders gut zu erkennen, dass sich die relative Lagen und/oder Positionen des Furchenverschließungs- und/oder Andrückelements 17 hinsichtlich des Rahmens 15 und/oder des Furchenöffnungselements 14 in Abhängigkeit der Ablagetiefe und/oder Bedeckungshöhe H1, H2 unterscheiden.

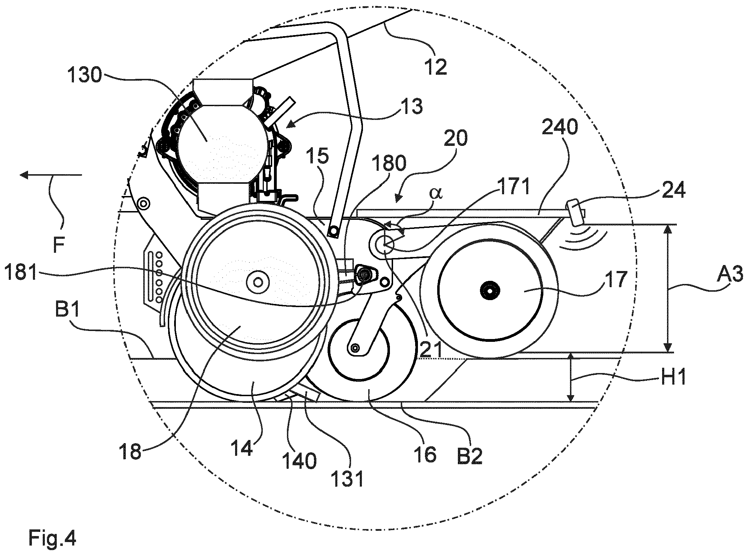

Darüber hinaus kann es erfindungsgemäß vorgesehen sein, dass die Sensoreinrichtung 20 wenigstens einen dem Rahmen 15 zugeordneten dritten Sensor 24 umfasst, welcher dazu eingerichtet ist, einen Abstand A3 und damit eine relative Lage und/oder Position, insbesondere einen Winkel, des Rahmens 15 und damit der Reiheneinheit 10 zum Ackerboden B1 zu erfassen, wie in Fig.4 gezeigt ist. Der dritte Sensor 24 ist über eine Haltevorrichtung 240 mit dem Rahmen 15 verbunden und nach hinten über das Furchenverschließungs- und/oder Andrückelement 17 herausragend ausgebildet.

Die Reiheneinheit 10 und damit auch das Furchenöffnungselement 14 und/oder das Furchenverschließungs- und/oder Andrückelement 17 sind in diesem Ausführungsbeispiel in Abhängigkeit wenigstens eines Einstellparameters mit einstellbarem und/oder bedarfsgerechtem Anpressdruck gegen den Ackerboden B2 andrückbar. Hierzu kann beispielsweise eine in an sich bekannter Weise ausgebildete Scharhydraulik mit wenigstens einem Stellantrieb vorgesehen sein, die der Reiheneinheit 10 zugeordnet ist.

Die Auswertevorrichtung S1 ist hierbei alternativ oder zusätzlich dazu eingerichtet, Bewegungen der Reiheneinheit 10 und/oder ein Bodenprofil des Ackerbodens B1 in Abhängigkeit wenigstens eines Messsignals der Sensoreinrichtung 20, insbesondere wenigstens eines Sensoren 21-24, zu erfassen und/oder zu bestimmen. Die Auswertevorrichtung S1 ist hierbei ferner dazu eingerichtet, den wenigstens einen Einstellparameter für den Anpressdruck in Abhängigkeit der Bewegungen und/oder des Bodenprofils vorzugeben und/oder einzustellen. Unter derartigen Bewegungen der Reiheneinheit 10 sind erfindungsgemäß vertikal nach oben oder unten gerichtete Auslenkungen und/oder Schwingungen der Reiheneinheit 10 zu verstehen. Mit anderen Worten beschreibt die Größe der Bewegungen die Laufruhe der Reiheneinheit 10 beim Überfahren der Nutzfläche bzw. des Ackerbodens B1. Bei eher größeren Bewegungen der Reiheneinheit 10 und/oder einem stärker schwankenden Bodenprofil bzw. unebenen Ackerboden B1 kann somit beispielsweise ein höherer Anpressdruck gewählt und/oder eingestellt werden.

Die in den Ausführungsbeispielen beschriebenen und/oder gezeigten Abstandssensoren können je Bedarf beispielsweise nach Art von optischen und/oder berührungsfreie erfassenden Sensoren wie Ultraschall- oder Radarsensoren oder dergleichen ausgebildet sein. Alternativ oder zusätzlich hierzu wären auch mechanische und/oder berührungsempfindliche Sensoren wie beispielsweise Tastsensoren oder dergleichen denkbar.

Weiterhin ist der Reiheneinheit alternativ oder zusätzlich zu den dargestellten Ausführungsbeispielen ein Steuer- und/oder Regelsystem zugeordnet, in welches die Auswertevorrichtung S1 der Reiheneinheit 10 integriert ist. Das Steuer- und/oder Regelsystem kann dabei an der Reiheneinheit 10 selbst oder alternativ an der Verteilmaschine und/oder an einer der Verteilmaschine zugeordneten Zugmaschine angeordnet sein.

Des Weiteren kann die Reiheneinheit 10 alternativ oder zusätzlich zu den dargestellten Ausführungsbeispielen wenigstens einen Aktor zum Verstellen der Ablagetiefe und/oder Bedeckungshöhe H1, H2 umfassen. Der Aktor kann dabei alternativ oder zusätzlich zum Einstellhebel 182 mit dem Tiefenführungselement 18 gekoppelt und dazu eingerichtet sein, die relative Lage und/oder Position des Tiefenführungselements 14 zu beeinflussen. Weiterhin kann es dabei vorgesehen sein, dass das Steuer- und/oder Regelsystem dazu eingerichtet ist, den Aktor auf Basis der von der Auswertevorrichtung S1 bestimmten Ablagetiefe und/oder Bedeckungshöhe H1, H2 zu steuern und/oder zu regeln.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Reiheneinheit
- 11: Prarallelogrammaufhängung
- 12: Vorratsbehälter
- 120: Auslauf
- 13: Materialablagevorrichtung
- 130: Dosiervorrichtung
- 131: Ausbringleitung
- 14: Furchenöffnungselement
- 140: Furchenformer
- 15: Rahmen
- 16: Fangelement
- 17: Furchenverschließungs- und/oder Andrückelement
- 170: Schwenkarm
- 171: Schwenkachse des Furchenverschließungs- und/oder Andrückelements
- 18: Tiefenführungselement
- 180: Tragarm
- 181: Schwenkachse des Tiefenführungselements
- 182: Einstellhebel
- 183: Schwenkachse des Einstellhebels
- 20: Sensoreinrichtung
- 21: Erster Sensor
- 22: Zweiter Sensor
- 23: Abstandssensor
- 24: Dritter Sensor

- A1: Abstand des Abstandssensoren
- A2: Abstand des ersten Sensors
- A3: Abstand des dritten Sensors
- B1: Ackerboden
- B2: Furche
- F: Fahrtrichtung; Arbeitsrichtung
- H1, H2: Ablagetiefe und/oder Bedeckungshöhe
- M: Granulares Material
- S1: Auswertevorrichtung
- S2: Signalleitungen

- α: Verschwenkungswinkel des Furchenverschließungs und/oder Andrückelements
- β: Verschwenkungswinkel des Einstellhebels

## Patentansprüche

1. Reiheneinheit (10) für eine landwirtschaftliche Verteilmaschine, insbesondere Sämaschine, zum Ablegen von granularem Material (M), insbesondere Saatgut und/oder Dünger, auf einer landwirtschaftlichen Nutzfläche, umfassend;
- zumindest ein Furchenöffnungselement (14), welches mit einem Rahmen (15) der Reiheneinheit (10) gekoppelt und zum Ausbilden, insbesondere Öffnen, einer Furche (B2) entlang eines Ackerbodens (B1) der Nutzfläche geeignet ist;
- zumindest eine Materialablagevorrichtung (13), welche dazu eingerichtet ist, das granulare Material (M), vorzugsweise in bedarfsgerechter Weise, zuzubringen und innerhalb der Furche (B2) abzulegen;
- zumindest ein Furchenverschließungs- und/oder Andrückelement (17), welches relativ zum Rahmen (15) und/oder zum Furchenöffnungselement (14) gesehen in vertikaler Richtung beweglich und in einer Arbeitsrichtung (F) der Reiheneinheit (10), vorzugsweise beabstandet, hinter dem Furchenöffnungselement (14) angeordnet und dazu eingerichtet ist, die Furche (B2) zumindest teilweise zu verschließen und/oder anzudrücken; und
- zumindest eine zugeordnete elektronische Auswertevorrichtung (S1) mit wenigstens einer Sensoreinrichtung (20), welche dazu eingerichtet, eine Ablagetiefe und/oder Bedeckungshöhe (H1, H2) des in der Furche (B2) abgelegten und/oder bedeckten granularen Materials (M) zu bestimmen;
**dadurch gekennzeichnet, dass** die Sensoreinrichtung (20) wenigstens einen dem Furchenverschließungs- und/oder Andrückelement (17) zugeordneten ersten Sensor (21) umfasst, welcher dazu eingerichtet ist, eine relative Lage und/oder Position des Furchenverschließungs- und/oder Andrückelements (17) hinsichtlich des Rahmens (15) und/oder Furchenöffnungselements (14) zu erfassen, wobei die Auswertevorrichtung (S1) dazu eingerichtet ist, die relative Lage und/oder Position des Furchenverschließungs- und/oder Andrückelements (17) zur Bestimmung der Ablagetiefe und/oder Bedeckungshöhe (H1, H2) zu berücksichtigen.

2. Reiheneinheit (10) nach Anspruch 1, **dadurch gekennzeichnet, dass** das Furchenverschließungs- und/oder Andrückelement (17) um eine zumindest im Wesentlichen quer zur Arbeitsrichtung (F) ausgerichtete Schwenkachse (171) schwenkbar mit dem Rahmen (15) und/oder Furchenöffnungselement (14) gekoppelt ist, wobei der wenigstens eine erste Sensor (21) dazu eingerichtet ist, eine Verschwenkung, vorzugsweise einen Verschwenkungswinkel (a), des Furchenverschließungs- und/oder Andrückelements (17) um die Schwenkachse (171) zu erfassen.

3. Reiheneinheit (10) nach zumindest einem der vorgenannten Ansprüche 1 und/oder 2, wobei die Reiheneinheit (10) wenigstens ein relativ zum Rahmen (15) verstellbares Tiefenführungselement (18), insbesondere nach Art einer Tiefenführungsrolle, umfasst, welches dem Furchenöffnungselement (14) und/oder der Materialablagevorrichtung (13) zugeordnet ist, **dadurch gekennzeichnet, dass** die Sensoreinrichtung (20) wenigstens einen dem Tiefenführungselement (18) zugeordneten zweiten Sensor (22) umfasst, welcher dazu eingerichtet ist, eine relative Lage und/oder Position des Tiefenführungselements (18) zum Rahmen (15) zu erfassen, wobei die Auswertevorrichtung (S1) dazu eingerichtet ist, die relative Lage und/oder Position des Tiefenführungselements (18) zur Bestimmung der Ablagetiefe und/oder Bedeckungshöhe (H1, H2) zu berücksichtigen.

4. Reiheneinheit (10) nach zumindest einem der vorgenannten Ansprüche 1 bis 3, **dadurch gekennzeichnet, dass** die Sensoreinrichtung (20) wenigstens einen dem Rahmen (15), der Materialablagevorrichtung (13) und/oder dem Furchenverschließungs- und/oder Andrückelement (17) zugeordneten Abstandssensor (23) umfasst, wobei der Abstandssensor (23) dazu eingereicht ist, wenigstens einen Abstand (A1) zum Ackerboden (B1), insbesondere zur Furche (B2), zu erfassen, und wobei die Auswertevorrichtung (S1) dazu eingerichtet ist, den wenigstens einen Abstand (A1) zur Bestimmung der Ablagetiefe und/oder Bedeckungshöhe (H1, H2) zu berücksichtigen.

5. Reiheneinheit (10) nach zumindest einem der vorgenannten Ansprüche 1 bis 4, wobei der Reiheneinheit (10) wenigstens ein Steuer- und/oder Regelsystem zugeordnet ist, **dadurch gekennzeichnet, dass** die Reiheneinheit (10) zumindest einen Aktor zum Verstellen der Ablagetiefe und/oder Bedeckungshöhe (H1, H2) umfasst, wobei das Steuer- und/oder Regelsystem dazu eingerichtet ist, den Aktor auf Basis der bestimmten Ablagetiefe und/oder Bedeckungshöhe (H1, H2) zu steuern und/oder zu regeln.

6. Reiheneinheit (10) nach Anspruch 3 und 5, **dadurch gekennzeichnet, dass** der Aktor zwischen dem Rahmen (15) und dem Tiefenführungselement (18) angeordnet und dazu eingerichtet ist, die relative Lage und/oder Position des Tiefenführungselements (18) zu beeinflussen.

7. Reiheneinheit (10) nach zumindest einem der vorgenannten Ansprüche 1 bis 6, **dadurch gekennzeichnet, dass** die Sensoreinrichtung (20) wenigstens einen dem Rahmen (15) zugeordneten dritten Sensor (24) umfasst, welcher dazu eingerichtet ist, eine relative Lage und/oder Position, insbesondere einen Winkel, des Rahmens (15) zum Ackerboden (B1) und/oder einem der Verteilmaschine zugeordneten Maschinenrahmen zu erfassen, wobei die Auswertevorrichtung (S1) dazu eingerichtet ist, die relative Lage und/oder Position, insbesondere den Winkel, des Rahmens (15) zur Bestimmung der Ablagetiefe und/oder Bedeckungshöhe (H1, H2) zu berücksichtigen.

8. Reiheneinheit (10) nach zumindest einem der vorgenannten Ansprüche 1 bis 7, wobei das Furchenöffnungselement (14) und/oder das Furchenverschließungs- und/oder Andrückelement (17) in Abhängigkeit wenigstens eines Einstellparameters mit einstellbarem und/oder bedarfsgerechtem Anpressdruck gegen den Ackerboden (B1) andrückbar sind, **dadurch gekennzeichnet, dass** die Auswertevorrichtung (S1) dazu eingerichtet ist, Bewegungen der Reiheneinheit (10) und/oder ein Bodenprofil des Ackerbodens (B1) in Abhängigkeit wenigstens eines Messsignals der Sensoreinrichtung (20), insbesondere wenigstens eines Sensoren (21-24), zu erfassen und/oder zu bestimmen, wobei die Auswertevorrichtung (S1) vorzugsweise dazu eingerichtet ist, den wenigstens einen Einstellparameterfür den Anpressdruck in Abhängigkeit der Bewegungen und/oder des Bodenprofils vorzugeben und/oder einzustellen.

9. Verfahren zum Ablegen von granularem Material (M), insbesondere Saatgut und/oder Dünger, auf einer landwirtschaftlichen Nutzfläche mittels einer Reiheneinheit (10) einer landwirtschaftlichen Verteilmaschine, insbesondere einer Reiheneinheit (10) nach zumindest einem der vorgenannten Ansprüche, mit den Schritten:
- Einstellen einer Ablagetiefe und/oder Bedeckungshöhe (H1, H2) für das granulare Material (M);
- Ausbilden, vorzugsweise Öffnen, einer Furche (B2) entlang eines Ackerbodens (B1) der Nutzfläche mittels zumindest einem Furchenöffnungselements (14), welches mit einem Rahmen (15) der Reiheneinheit (10) gekoppelt ist;
- Zubringen und Ablegen des granularen Materials (M) innerhalb der Furche (B2) mittels wenigstens einer Materialablagevorrichtung (13),
- Verschließen und/oder Andrücken der Furche (B2) mittels wenigstens einem Furchenverschließungs- und/oder Andrückelement (17), welches relativ zum Rahmen (15) und/oder Furchenöffnungselement (14) gesehen in vertikaler Richtung beweglich und in einer Arbeitsrichtung (F) der Reiheneinheit (10), vorzugsweise beabstandet, hinter dem Furchenöffnungselement (14) angeordnet ist;
- Bestimmen einer Ablagetiefe und/oder Bedeckungshöhe (H1, H2) des in der Furche (B2) abgelegten und/oder bedeckten granularen Materials (M) mittels einer zugordneten elektronischen Auswertevorrichtung (S1) die wenigstens eine Sensoreinrichtung (20) umfasst; und
- Anpassen der Ablagetiefe und/oder Bedeckungshöhe (H1, H2) auf der Basis der von der Auswertevorrichtung (S1) bestimmten Ablagetiefe und/oder Bedeckungshöhe (H1, H2), vorzugsweise wenn die bestimmte Ablagetiefe und/oder Bedeckungshöhe (H1, H2) einen vorgegebenen Sollwert überschreitet;
**gekennzeichnet durch den Schritt:**
- Erfassen einer relativen Lage und/oder Position des Furchenverschließungs- und/oder Andrückelements (17) hinsichtlich des Rahmens (15) und/oder Furchenöffnungselements (14) mittels wenigstens einem ersten Sensor (21) der Sensoreinrichtung (20), welcher dem Furchenverschließungs- und/oder Andrückelement (17) zugeordnet ist, wobei die relative Lage und/oder Position des Furchenverschließungs- und/oder Andrückelements (17) zur Bestimmung der Ablagetiefe und/oder Bedeckungshöhe (H1, H2) von der Auswertevorrichtung (S1) berücksichtigt wird.

10. Verfahren nach Anspruch 9, **dadurch gekennzeichnet, dass** die Sensoreinrichtung (20) wenigstens einen Abstandssensor (23) umfasst der einen Abstand (A1) zum Ackerboden (B1), insbesondere zur Furche (B2), erfasst, wobei der Abstand (A1) von der Auswertevorrichtung (S1) zur Bestimmung der Ablagetiefe und/oder Bedeckungshöhe (H1, H2) berücksichtigt wird.

11. Verfahren nach zumindest einem der vorgenannten Ansprüche 9 und/oder 10, wobei die Reiheneinheit (10) wenigstens ein relativ zum Rahmen (15) verstellbares Tiefenführungselement (18), insbesondere nach Art einer Tiefenführungsrolle, umfasst, welches dem Furchenöffnungselement (14) und/oder der Materialablagevorrichtung (13) zugeordnet ist, **dadurch gekennzeichnet, dass** die Sensoreinrichtung (20) wenigstens einen dem Tiefenführungselement (18) zugeordneten zweiten Sensor (22) umfasst der eine relative Lage und/oder Position des Tiefenführungselements (18) zum Rahmen (15) erfasst, wobei die relative Lage und/oder Position des Tiefenführungselements (18) von der Auswertevorrichtung (S1) zur Bestimmung der Ablagetiefe und/oder Bedeckungshöhe (H1, H2) berücksichtigt wird.

12. Verfahren nach Anspruch 11, wobei der Reiheneinheit (10) wenigstens ein Steuer- und/oder Regelsystem zugeordnet ist, **dadurch gekennzeichnet, dass** dem Rahmen (15) und/oder dem Tiefenführungselement (18) wenigstens ein Aktor zum Verstellen der Ablagetiefe und/oder Bedeckungshöhe (H1, H2) zugeordnet ist, wobei das Steuer- und/oder Regelsystem den Aktor auf der Basis der bestimmten Ablagetiefe und/oder Bedeckungshöhe (H1, H2) steuert und/oder regelt.

13. Verfahren nach zumindest einem der vorgenannten Ansprüche 9 bis 12, **dadurch gekennzeichnet, dass** die Sensoreinrichtung (20) wenigstens einen dem Rahmen (15) zugeordneten dritten Sensor (24) umfasst der eine relative Lage und/oder Position, insbesondere einen Winkel, des Rahmens (15) zum Ackerboden (B1) und/oder einem der Verteilmaschine zugeordneten Maschinenrahmen erfasst, wobei die relative Lage und/oder Position, insbesondere der Winkel, des Rahmens (15) von der Auswertevorrichtung (S1) zur Bestimmung der Ablagetiefe und/oder Bedeckungshöhe (H1, H2) berücksichtigt wird.

14. Reiheneinheit (10) nach zumindest einem der vorgenannten Ansprüche 9 bis 13, wobei das Furchenöffnungselement (14) und/oder das Furchenverschließungs- und/oder Andrückelement (17) in Abhängigkeit wenigstens eines Einstellparameters mit bedarfsgerechtem Anpressdruck gegen den Ackerboden (B1) andrückbar sind, **dadurch gekennzeichnet, dass** Bewegungen der Reiheneinheit (10) und/oder ein Bodenprofil des Ackerbodens (B1) von der Auswertevorrichtung (S1) in Abhängigkeit wenigstens eines Messsignals der Sensoreinrichtung (20), insbesondere wenigstens eines Sensoren (21-24), erfasst und/oder bestimmt werden, wobei vorzugsweise der wenigstens eine Einstellparameter für den Anpressdruck von der Auswertevorrichtung (S1) in Abhängigkeit der erfassten und/oder bestimmten Bewegungen der Reiheneinheit (10) und/oder des Bodenprofils vorgegeben und/oder eingestellt wird.
